**Europäisches Patentamt**

**European Patent Office**

**Office européen des brevets**

(11) Numéro de publication : **0 116 529 B2**

(12) **NOUVEAU FASCICULE DE BREVET EUROPEEN**

(45) Date de publication du nouveau fascicule du brevet : **15.04.92 Bulletin 92/16**

(51) Int. Cl.$^5$ : **C01C 1/18**

(21) Numéro de dépôt : **84870013.4**

(22) Date de dépôt : **31.01.84**

(54) **Procédé et appareillage pour la production de nitrate d'ammonium.**

(30) Priorité : **08.02.83 LU 84636**

(43) Date de publication de la demande :
**22.08.84 Bulletin 84/34**

(45) Mention de la délivrance du brevet :
**21.01.87 Bulletin 87/04**

(45) Mention de la décision concernant
l'opposition :
**15.04.92 Bulletin 92/16**

(84) Etats contractants désignés :
**AT BE CH DE FR GB IT LI NL SE**

(56) Documents cités :
**DE-B- 1 179 543**
**DE-C- 614 324**
**DE-C- 894 995**
**DE-C- 3 113 783**
**FR-A- 715 917**
**FR-A- 716 595**
**FR-A- 730 380**
**FR-A- 1 028 427**
**FR-A- 1 356 054**

(56) Documents cités :
**GB-A- 2 096 124**
**US-A- 2 089 945**
**US-A- 2 551 569**
**US-A- 3 285 695**
**Hydrocarbon Processing Nov. 1978 pp. 165-175.**
**Chemische Technologie Tome I, Carl Hanser Verlag 1969 pp. 673-677**

(73) Titulaire : **Pouilliart, Roger Victor**
**Avenue de la Réforme, 32**
**B-1080 Bruxelles (BE)**
Titulaire : **van Hecke, Francis Charles**
**Avenue de Tervuren, 183**
**B-1040 Bruxelles (BE)**

(72) Inventeur : **Pouilliart, Roger Victor**
**Avenue de la Réforme, 32**
**B-1080 Bruxelles (BE)**
Inventeur : **van Hecke, Francis Charles**
**Avenue de Tervuren, 183**
**B-1040 Bruxelles (BE)**

(74) Mandataire : **Vanderperre, Robert et al**
**Bureau Vander Haeghen S.A. Rue Colonel Bourg 108 A**
**B-1040 Bruxelles (BE)**

EP 0 116 529 B2

EP 0 116 529 B2

## Description

La présente invention est relative à un procédé et à un appareillage pour produire des solutions concentrées de nitrate d'ammonium par neutralisation d'acide nitrique au moyen d'ammoniac au sein d'une solution aqueuse éventuellement maintenue en circulation dans une boucle de réaction et soumise à une pression supérieure à la tension de vapeur de la solution aqueuse de nitrate d'ammonium pendant la formation de nitrate d'ammonium, en utilisant la chaleur libérée par la réaction de neutralisation, du moins en partie, pour concentrer la solution de nitrate d'ammonium soutirée à la zone de réaction, par détente dans une installation d'évaporation dans laquelle au moins l'évaporateur qui porte la solution de nitrate d'ammonium à la concentration finale, est réchauffé au moyen de la chaleur disponible dans la zone de réaction.

Elle concerne en particulier un procédé autothermique susceptible de fournir une solution de nitrate d'ammonium de concentration suffisante, tout en utilisant des solutions relativement peu concentrées d'acide nitrique.

La majeure partie de la production industrielle de nitrate d'ammonium est destinée à la fabrication d'engrais agricoles azotés ou complexes. La forme préférée de mise en oeuvre du nitrate d'ammonium pour la fabrication desdits engrais est une solution concentrée chaude de concentration supérieure à 90 % en poids. En général, on utilise, soit des solutions à 94-95 % en poids, soit à 97-98 % en poids de nitrate d'ammonium.

L'ammoniac est en général disponible sous forme de liquide anhydre; il est mis en oeuvre de préférence sous forme de gaz anhydre après l'utilisation du potentiel de réfrigération lié au processus de vaporisation de l'ammoniac liquide.

L'acide nitrique industriel qui est produit par la combustion de l'ammoniac est normalement disponible à une concentration de 56 % à 60 % en poids.

Dans certaines réalisations industrielles récentes, il est possible d'obtenir une fraction de la production sous forme d'acide à 65-67% en poids, mais'les contraintes écologiques et économiques limitent cette fraction à environ un quart de la production de l'unité, tandis que le courant principal de production atteint une concentration de l'ordre de 60 % en poids d'acide nitrique.

Une autre source d'acide nitrique est constituée par les installations de lavage de gaz résiduaires nitreux dans divers procédés de fabrications chimiques produisant de l'acide nitrique dilué à concentration d'environ 40 % en poids.

La réaction de neutralisation de l'acide nitrique par l'ammoniac est exothermique. Dans les conditions industrielles usuelles, la chaleur disponible comporte environ 104 Mégajoules/Kmole lorsque l'acide nitrique de départ présente une concentration de 54 à 60 % en poids.

Dans les procédés les plus anciens, comme par exemple celui décrit dans le brevet français FR-A-730380, la réaction de neutralisation est effectuée à la pression atmosphérique. Il est alors connu de concentrer la solution soutirée au réacteur, dans une série de séparateurs soumis à des vides de plus en plus poussés.

On connaît aussi des procédés de synthèse suivant lesquels on effectue la réaction de neutralisation dans une cuve de réaction au sein d'une masse importante de solution de nitrate d'ammonium portée ensuite à une concentration finale de 94 à 95 % en poids sans avoir recours à un apport extérieur de calories. Dans ces procédés connus, la chaleur libérée par la réaction de neutralisation est évacuée sous forme de vapeur de procédé par évaporation d'une partie de l'eau qui a été apportée par les réactifs. La concentration de la solution de nitrate d'ammonium qui est formée dans la cuve de réaction est d'autant plus élevée que la production de vapeur de procédé est plus importante.

Pour récupérer la chaleur de réaction à un niveau de température plus élevé, on conduit la réaction dans les procédés connus, à une pression d'environ 4 bars absolus.

Par exemple, le brevet US-A-2551569 décrit un procédé qui est particulièrement utile pour la production d'une solution contenant environ 95% de nitrate d'ammonium au moyen d'acide nitrique ayant une concentration comprise entre 40 et 50 %.

Les réactifs sont introduits dans un réacteur constitué d'une boucle de réaction. Dans ce réacteur, la chaleur de réaction est utilisée pour la production de vapeur de procédé. Le produit, liquide déjà soumis à une élévation de concentration par la production de vapeur de procédé, est soutiré de la boucle de réaction et après passage dans un échangeur de chaleur est amené dans un premier évaporateur où il subit une première détente dans la partie supérieure de cet évaporateur. Une solution plus concentrée quitte l'évaporateur et est envoyée, après réchauffage, par l'intermédiaire de l'échangeur de chaleur susdit vers un deuxième évaporateur. Le deuxième évaporateur est chauffé par la vapeur de procédé produite dans le réacteur. La solution plus concentrée issue du premier évaporateur subit dans le deuxième évaporateur, une seconde évaporation et une seconde détente, la vapeur libérée dans le second évaporateur est utilisée pour réchauffer le premier évaporateur.

Dans le brevet US-A-2551569, la vapeur de procédé libérée lors d'une première étape de concentration

2

effectuée au cours de la réaction est donc réutilisée comme fluide chauffant pour porter à la concentration finale, la solution de nitrate d'ammonium partiellement concentrée, soutirée au réacteur.

Une détente multiple de la solution de nitrate d'ammonium est donc connue, quand on opère la réaction de neutralisation avec des solutions bouillantes et quand on fait un réchauffage intermédiaire entre les détentes.

Par le brevet FR-A-1028427, il est connu d'effectuer une préconcentration par évaporation dans le réacteur, suivie d'une seule détente de la solution de nitrate d'ammonium à une pression inférieure, où la concentration par évaporation est réalisée au moyen d'un chauffage indirect par la vapeur produite dans le réacteur au cours de la préconcentration.

Dans ces procédés connus, la réaction de neutralisation de l'acide nitrique est réalisée au sein de solutions bouillantes. Le niveau maximum de température auquel la chaleur de réaction est disponible pour la concentration finale, est celui de la température de condensation de la vapeur de procédé au cours de la réaction.

Cependant, dans aucun des procédés précités, le rendement énergétique ne permet, par exemple, de porter la solution de nitrate d'ammonium à une concentration finale suffisamment élevée, c'est-à-dire supérieure à 95%, lorsque l'acide de départ est de l'acide nitrique usuel, ayant une concentration d'environ 55 à 56 % en poids.

De plus, dans ces procédés connus, la vapeur produite contient des quantités de nitrate d'ammonium, d'ammoniac et d'acide nitrique d'autant plus importantes que la température de régime de la cuve de réaction est plus élevée. Il en résulte principalement que l'appareillage dans lequel cette vapeur est réutilisée doit être construit en alliages spéciaux résistant à la corrosion. En outre, les condensats formés par cette vapeur de procédé ne peuvent pas être jetés à l'égout sans un traitement préalable destiné à éliminer la majeure partie des ions ammonium et nitrate

Par le brevet FR-A-715917, on sait qu'on peut effectuer la réaction de neutralisation sous pression sans ébullition de la solution et utiliser pour la concentration par évaporation de la solution de nitrate d'ammonium la chaleur produite par la réaction de neutralisation elle-même. Dans ce procédé connu, le courant de la solution de nitrate d'ammonium soutiré au réacteur est détendu intégralement à une pression d'évaporation, la solution obtenue étant réchauffée et concentrée par évaporation au moyen d'un chauffage indirect avec la solution du réacteur sous pression, où l'on a opéré sous une pression supérieure à la tension de vapeur de cette solution.

On peut employer un léger excès ammoniac de manière à éviter la corrosion de l'appareillage par l'acide nitrique et on sépare l'ammoniaque en excès et la vapeur au moyen d'une colonne de rectification

La demande de brevet britannique publiée sous le N° 2 096 124 décrit un procédé pour produire une solution concentrée à plus de 95 % de nitrate d'ammonium, au moyen d'acide nitrique d'environ 55-56 % en poids, utilisant pour la concentration par évaporation de la solution de nitrate d'ammonium, la chaleur produite par la réaction de neutralisation elle-même. Dans ce procédé connu, où la réaction de neutralisation est réalisé sous pression sans ébullition de la solution, un courant principal de la solution de nitrate d'ammonium, soutiré au réacteur, est détendu à une pression de vaporisation, la solution obtenue étant réchauffée et concentrée par évaporation au moyen d'un courant secondaire de la solution de nitrate d'ammonium.

Ce procédé, qui peut être mis en oeuvre et appliqué éventuellement en plusieurs stades, prévoit, comme le procédé précédent, que le courant principal soit réchauffé dès la première détente et à chacun des stades successifs par le courant secondaire réactionnel qui est recyclé vers le réacteur.

La présente invention vise à améliorer le rendement énergétique de procédés de synthèse de nitrate d'ammonium connus et particulièrement de ceux réalisés sans production de vapeur de procédé. Elle propose un procédé et une installation de production de nitrate d'ammonium qui permet d'atteindre une concentration finale de la solution de nitrate d'ammonium supérieure à 95 %, même en utilisant de l'acide nitrique dilué.

Le procédé suivant l'invention, est essentiellement caractérisé en ce qu'on réalise la première étape de concentration par une double détente sans réchauffage intermédiaire dans une installation d'évaporation à effet dans laquelle au moins un évaporateur est chauffé au moyen de vapeur libérée par une détente adiabatique de ladite solution de nitrate d'ammonium dans un séparateur.

Dans un premier mode de mise en oeuvre particulier du procédé, on utilise, au moins en partie, la solution en recirculation comme fluide calorifère pour chauffer l'évaporateur susdit apportant le mélange à la concentration finale.

Suivant une particularité de l'invention, on réalise la réaction de neutralisation en présence d'un léger excès d'ammoniac que l'on neutralise ensuite par un complément d'acide nitrique dans la solution que l'on soutire de la zone de réaction, juste avant la première détente.

Dans un mode de mise en oeuvre particulier, la solution en recirculation dans la zone de réaction est utilisée comme fluide calorifère dans un échangeur de chaleur pour produire de la vapeur basse pression tandis que la solution que l'on soutire à la zone de réaction, est concentrée dans une installation à multiple effet à pression décroissante et que l'évaporateur amenant le mélange à la concentration finale utilise au moins en partie la

EP 0 116 529 B2

vapeur produite dans l'échangeur de chaleur de ladite zone de réaction.

La réaction de neutralisation se déroule avantageusement dans la zone de réaction à une pression comprise entre 3 et 10 bars absolus.

L'invention concerne également une installation de production de nitrate d'ammonium mettant en oeuvre le procédé décrit ci-dessus.

L'installation est essentiellement caractérisée en ce que les deux premiers évaporateurs réalisant la première étape de concentration, sont reliés l'un à l'autre par une vanne de détente réalisant une détente adiabatique, en l'absence de réchauffage intermédiaire, le premier évaporateur étant un séparateur, le second évaporateur étant un évaporateur à films qui produit, par exemple, la préconcentration à 77,5 % en poids et en ce qu'au moins un évaporateur ultérieur, échauffé au moyen de la chaleur disponible dans la zone de réaction réalise une seconde étape de concentration.

Dans une forme de réalisation particulière, la zone de réaction est constituée d'une boucle de réaction comportant un réacteur éventuellement tubulaire, au moins un échangeur indirect destiné à évacuer la chaleur libérée par la réaction et par conséquent à stabiliser la température et une pompe de recirculation.

D'autres particularités et détails de l'invention apparaîtront au cours de la description suivante des dessins et exemples de réalisation de ladite invention, donnés à titre purement illustratif.

Dans ces dessins :

la figure 1 illustre schématiquement une installation de production de nitrate d'ammonium, comportant une boucle de réaction et mettant en oeuvre le procédé suivant l'invention ;

la figure 2 illustre schématiquement une installation mettant en oeuvre le procédé suivant l'invention et comportant une cuve de réaction avec circulation interne ;

la figure 3 illustre schématiquement une installation de production dans laquelle la boucle de réaction comprend un rebouilleur;

la figure 4 illustre une installation de production avec évaporateur à double effet.

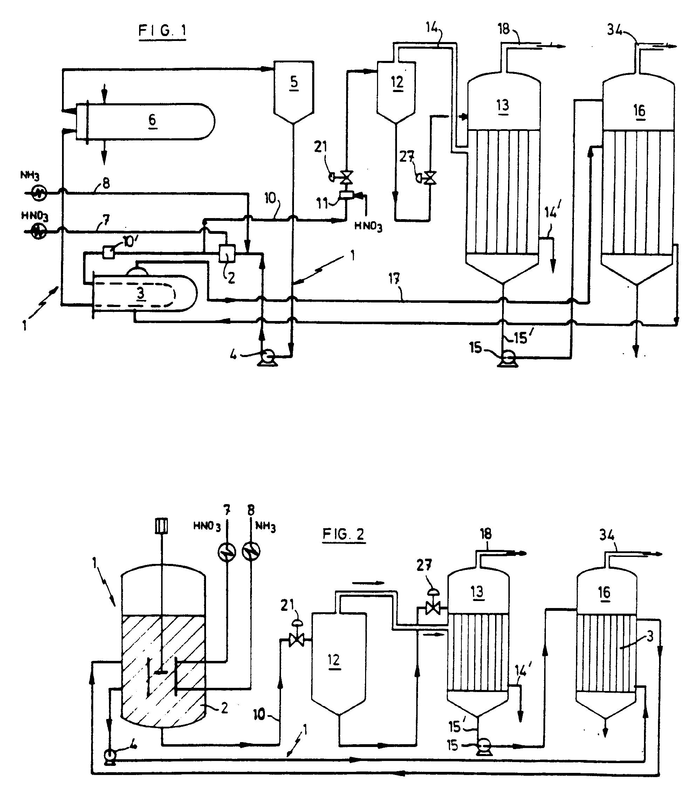

Le principe du procédé est décrit en fonction d'une installation schématisée à la figure 1 et fonctionnant en deux étapes de détente utilisant de l'acide nitrique d'une concentration usuelle à 54 %.

Le nitrate d'ammonium est obtenu par neutralisation d'acide nitrique au moyen d'ammoniac gazeux et/ou éventuellement ammoniaque en solution aqueuse au sein d'une solution aqueuse maintenue sous une pression supérieure à la tension de vapeur de la solution et concentration par évaporation de la solution aqueuse de nitrate d'ammonium obtenue.

Comme montré à la figure 1, la zone de réaction est constitué d'une boucle de réaction désignée dans son ensemble par la notation de référence 1 et comportant essentiellement un réacteur tubulaire ou mélangeur statique 2, un échangeur de chaleur 3, une pompe de recirculation 4 et un vase d'expansion 5. Un second échangeur 6 de chaleur chauffé à l'aide de vapeur 5 bars n'est utilise que pour le démarrage de l'installation.

Les réactifs constitués d'acide nitrique 7 à une concentration d'environ 54 % et d'ammoniac 8 gazeux sont envoyés dans la boucle de réaction 1 par l'intermédiaire d'un mélangeur statique 2, tandis qu'une partie du mélange réactionnel est recyclée.

La pression de régime est ajustée à environ 4,6 bars de manière à éviter toute vaporisation. La solution de nitrate d'ammonium soutirée de la boucle de réaction 1 contient alors toute l'eau apportée par les réactifs.

Le taux de recyclage indispensable pour des concentrations d'acides usuelles est ajusté de manière à limiter la montée en température, du fait de la réaction par exemple à environ 10 °C. La chaleur de réaction est évacuée par un échangeur de chaleur 3 par un fluide caloporteur qui la transfère à l'étage de concentration finale 16 de la solution à 95 %.

Un soutirage continu 10 de solution chaude diluée contenant l'entièreté de la mise en oeuvre assure l'équilibre de régime de la boucle de réaction 1.

Du fait qu'il n'y a aucune vaporisation dans la boucle de réaction 1, le contrôle du degré d'acidité (pH) peut être ajusté en 10′ de manière à éviter la présence d'acide nitrique libre; on minimise ainsi les risques de corrosion.

Avant de soumettre la solution 10 à une concentration par évaporation dans une installation à multiple effet, on règle avantageusement au point 11, le degré d'acidité de manière à éliminer la présence d'ammoniac libre afin de réduire les pertes de ce réactif par volatilisation.

Cette solution chaude est ensuite soumise à une détente adiabatique dans un séparateur 12 à une pression intermédiaire de l'ordre de 1 bar. La détente adiabatique de la solution chaude soutirée sous pression de la boucle de réaction provoque la libération d'une certaine quantité de vapeur; la température de la solution baisse et la concentration de nitrate d'ammonium augmente. Contrairement à la pratique habituelle, la solution récoltée dans le séparateur 12 est immédiatement détendue à une deuxième pression encore plus basse et envoyée dans un évaporateur 13 qui est chauffé par la vapeur 14 libérée lors de la première détente. Les condensats sont évacués par le conduit 14′.

EP 0 116 529 B2

La solution produite dans l'échangeur-évaporateur 13 est ensuite conduite par la pompe 15 et le conduit 15' vers un second échangeur-évaporateur 16 dans lequel elle est chauffée et concentrée par évaporation à l'aide des calories fournies dans l'échangeur 3 par la solution en recirculation, au fluide qui circule dans la boucle 17.

La solution concentrée récoltée dans l'évaporateur 16 a une concentration de 95 % de nitrate d'ammonium.

La vapeur libérée par la solution dans l'évaporateur 13 est évacuée par le conduit 18.

Si la concentration de l'acide est supérieure à 54 %, le procédé peut même devenir exportateur de vapeur.

Le procédé suivant l'invention comporte une première détente initiale dans le séparateur 12 et une deuxième concentration dans l'évaporateur 13 en utilisant comme fluide chauffant la vapeur produite par la détente initiale.

Il est évident que, dans l'évaporateur 13, la température de la solution est inférieure à la température de condensation des vapeurs libérées lors de la détente initiale.

Le refroidissement que l'on observe lors de la seconde détente de la solution peut entraîner un risque de cristallisation dans l'évaporateur 13.

Dans tous les procédés connus, la solution obtenue après la première détente est immédiatement réchauffée, dans un évaporateur, soit par la vapeur du procédé US-A-2.551.569, soit par la solution chaude du réacteur de neutralisation (GB-A-2.096.124), soit par un fluide caloporteur transmettant la chaleur de neutralisation (FR-A-1.356.054).

La présente invention consiste à effectuer, contrairement à la pratique courante, une concentration par l'évaporation, immédiatement après la première détente, en utilisant la chaleur de condensation de la vapeur libérée au cours de cette détente initiale. On réalise ainsi une économie d'énergie importante:

La récupération d'énergie thermique est d'autant plus grande que la solution chaude initiale est plus diluée.

Le procédé suivant l'invention permet de réserver l'entièreté de la chaleur de réaction récupérée à un niveau de température plus élevé, pour réchauffer la ou les solutions de nitrate d'ammonium voisines de la concentration finale.

Le tableau I met en évidence l'économie d'énergie et les performances susceptibles d'être réalisées pour concentrer diverses solutions de nitrate d'ammonium, de concentrations initiales décroissantes par une détente suivie d'une évaporation autothermique.

Le tableau I résume les résultats obtenus dans une installation faisant intervenir une détente double et comportant un évaporateur à film laminaire tel que décrit à la figure 1. L'écart de température entre la solution 15' et le condensat 14' s'élève à environ 4 °C.

Dans chacun des essais, la température de la solution avant détente 10 est ajustée à 180 °C.

Dans ces essais, on a choisi la pression dans l'évaporateur 13 de manière à ne pas atteindre la température de cristallisation. L'économie d'énergie provient de la réutilisation de la chaleur de condensation de la vapeur libérée lors de la première détente.

Le tableau I mentionne également les concentrations pondérales de la solution de nitrate d'ammonium et les quantités d'eau évaporées dans une opération à détente simple selon les procédés connus lorsque la solution est détendue en une seule étape, dans le séparateur 12, à une pression identique à celle qui est imposée dans l'évaporateur 13.

(Voir Tableau I page 6)

Par ailleurs, le procédé suivant l'invention, en réalisant une séparation complète de la zone de réaction des boucles d'évaporation, permet de choisir pour chaque opération le degré d'acidité optimal. Il permet en effet de maintenir le mélange réactionnel légèrement ammoniacal dans la boucle de réaction et de neutraliser l'excès d'ammoniac par un ajout d'acide nitrique dans les boucles d'évaporation.

De ce fait, le risque de corrosion est réduit au minimum dans la boucle de réaction, où la température est élevée, tandis que les pertes d'ammoniac et de vapeurs d'acide nitrique sont réduites dans les évaporateurs.

Le procédé assure une sécurité d'exploitation élevée, particulièrement en raison du fait que le régime de température maximum limité à 180 °C est suffisant pour assurer son autonomie calorifique.

La préchauffe de l'acide nitrique peut être obtenue par la condensation de vapeur récupérée sous pression réduite. Avec une pression de l'ordre de 400 mbars, la température de l'acide est limitée automatiquement à environ 70 °C.

Comme illustré à la figure 2, l'installation peut, dans une forme de réalisation différente, comporter une cuve de réaction 2 avec circulation interne.

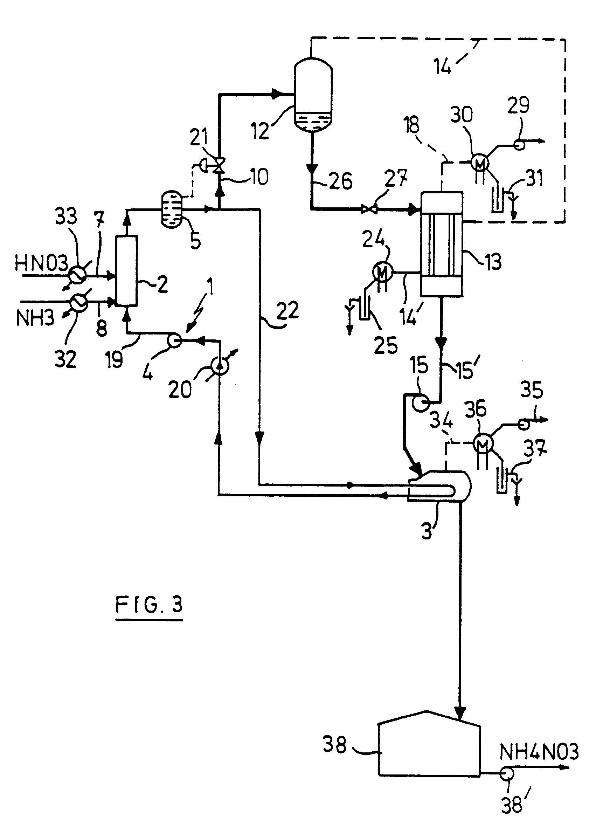

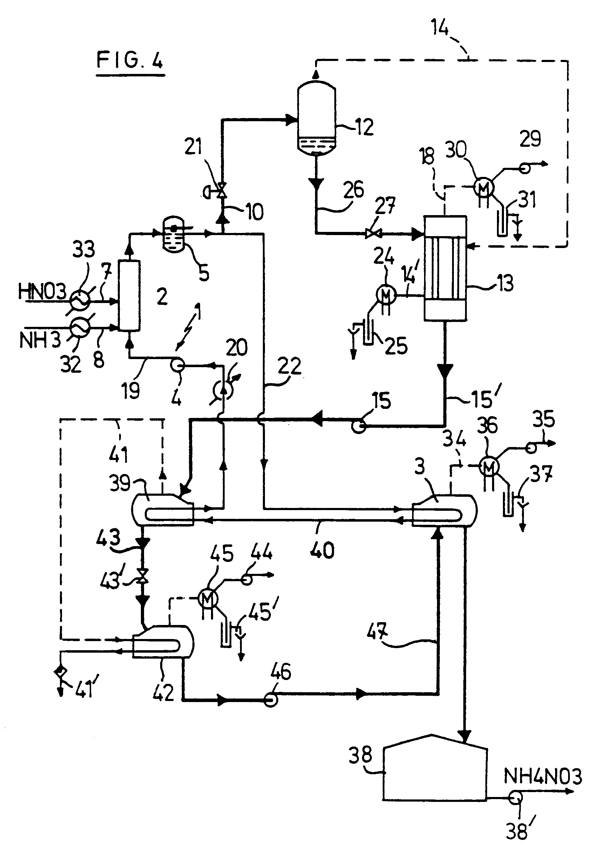

Dans deux autres formes de réalisation particulières de l'invention, illustrées aux figures 3 et 4, la boucle de réaction comprend le réacteur 2, un récipient à niveau constant 5, un premier échangeur-bouilleur 3 et la pompe de recirculation 4.

L'apport d'acide nitrique dans le réacteur 2 se fait par le conduit 7 et l'apport d'ammoniac gazeux par le conduit 8.

5

La pompe 4 recycle la solution dans le réacteur par le conduit 19. Dans le réacteur, la solution recyclée est chauffée par la chaleur de réaction et la solution chaude passe par le réservoir 5. La température et la concentration de la solution déterminent la tension de vapeur de la solution dans la boucle de réaction. La concentration de la solution dépend de la concentration de l'acide nitrique qui est mis en oeuvre. Pour un équilibre de régime stable, il faut que la chaleur soutirée à la boucle de recyclage compense exactement la chaleur fournie par la réaction.

Si l'énergie thermique disponible excède celle qui est requise pour produire la solution concentrée, il est avantageux d'installer, comme illustré aux figures 3 et 4, un échangeur-bouilleur 20 supplémentaire, qui est alimenté en eau alimentaire de chaudière pour produire de la vapeur basse pression. Dans le réservoir 5, le niveau est maintenu constant en régulant le soutirage de solution 10 par la vanne de détente 21. La majeure partie du courant de solution passe par le conduit 22 vers l'échangeur-bouilleur 3

## Tableau I

Etude comparative des performances atteintes par le procédé suivant l'invention et un procédé faisant intervenir une détente simple.

| Solution NH$_4$NO$_3$ avant détente (180°) | Procédé suivant l'invention | | | | Procédé connu à détente simple | | |
|---|---|---|---|---|---|---|---|
| | Pression de détente | | Solution NH$_4$NO$_3$ | Eau évaporée | Pression de détente dans le séparateur | Solution NH$_4$NO$_3$ à la sortie du séparateur | Eau évaporée dans le séparateur |
| | Pression intermédiaire | Pression finale | | | | | |
| Figure 1 repère (10) | (14) | (18) | (15') | (14) + (18) | — | | |
| % en poids | bar abs. | bar abs. | % en poids | kg eau par 1 000 kg NH$_4$NO$_3$ | bar abs. | % en poids | kg eau par 1 000 kg NH$_4$NO$_3$ |
| 70.2 | 0.7 | 0.2 | 85.6 | 256 | 0.2 | 78.7 | 154 |
| 65.6 | 0.6 | 0.15 | 83.3 | 324 | 0.15 | 74.3 | 180 |
| 61.8 | 0.4 | 0.125 | 81.0 | 383 | 0.125 | 71.4 | 217 |
| 56.0 | 0.25 | 0.085 | 77.5 | 495 | 0.085 | 66.1 | 273 |

où elle subit un refroidissement.

Dans le réacteur 2 qui peut être de type tubulaire avec éventuellement des éléments de contact ou du type mélangeur statique, l'élévation de température du mélange est d'autant plus importante que le taux de recirculation est plus faible.

La solution est soutirée par la vanne de détente 21 vers le séparateur 12.

La vapeur libérée est évacuée par le conduit 14 vers l'échangeur vertical a film laminaire 13, où elle se condense à l'extérieur des tubes, sous une pression réduite réglée par la pompe à vide 29. Les condensats recueillis à la base des tubes de l'échangeur 13 sont évacués par le conduit 14' vers le réfrigérant 24 et la garde barométrique 25.

La solution de nitrate d'ammonium soutirée au séparateur 12 est amenée par le conduit 26 et la vanne de détente 27 vers l'échangeur 13 où elle s'écoule en film laminaire sur la paroi intérieure des tubes

Une pression réduite est maintenue par la pompe à vide 29 et la vapeur libérée par l'évaporation de la solution sur la paroi des tubes est évacuée par le conduit 18 vers le réfrigérant condenseur 30, avec évacuation des condensats par la garde barométrique 31.

Les réactifs sont préchauffés dans les échangeurs 32 et 33 alimentés en vapeur basse pression 0,3 bar. Cette vapeur basse pression est disponible dans les conduits 34 du rebouilleur 3

Dans la fig. 3, la solution partiellement concentrée dans l'évaporateur 13 est envoyée par la pompe 15 vers l'échangeur-bouilleur 3 qui est chauffé par la solution recyclée dans la boucle de réaction. La pression d'ébullition est ajustée par l'ensemble pompe à vide 35 et réfrigérant 36 qui est raccordé au rebouilleur 3 par le conduit 34. La vapeur condensée dans le réfrigérant 36 est évacuée par la garde barométrique 37. La solution qui a atteint sa concentration finale est recueillie dans le réservoir de stockage 38 et envoyée vers l'utilisateur par la pompe 38'.

Si l'on désire réaliser la détente en trois étapes, comme illustré à la figure 4, on conduit la solution partiellement concentrée dans l'évaporateur 13 par la pompe 15 à travers le conduit 15' vers l'échangeur-bouilleur 39, qui est chauffé par la solution en circulation dans la boucle de réaction 1 par la conduite 40. Dans le rebouilleur 39, la solution est portée à ébullition et la vapeur produite est envoyée par le conduit 41, vers le serpentin de chauffage de l'échangeur-bouilleur 42 où elle se condense, avec évacuation des condensats par le purgeur 41'. La solution qui a été portée à l'ébullition sous pression dans le bouilleur 39, passe par le conduit 43 et la vanne de détente 43' vers le bouilleur qui fonctionne sous une pression réduite qui est réglée par l'ensemble pompe à vide 44 réfrigérant 45 et garde-barométrique 45'.

Après concentration par ébullition dans le bouilleur 42 à concurrence de la chaleur de condensation libérée dans le serpentin de chauffage, la solution est aspirée par la pompe 46 à travers le conduit 47 et envoyée au dernier étage de concentration dans l'échangeur-bouilleur 3.

Les conditions opératoires relatives au fonctionnement d'une installation, telle qu'illustrée à la figure 4, sont résumées dans le tableau II.

Le procédé suivant l'invention permet donc d'obtenir une solution finale de nitrate d'ammonium d'une concentration supérieure à 95% à partir d'un acide nitrique à 54%, sans apport extérieur de chaleur.

(Voir Tableau II page 8)

## Tableau II

Cet exemple chiffré illustre la production d'une solution de nitrate d'ammonium à 98 % en poids à partir d'acide nitrique à 54 % en poids et d'ammoniac gazeux dans une installation semblable à celle montrée à la figure 4.

| | Repères de la figure 4 | Débit (T/h) | Concentration % | Température °C |
|---|---|---|---|---|
| Alimentation du réacteur 2 | 2 | — | | |
| en acide nitrique 54 % en poids à 65 °C | 7 | 36,46 | 54 | 65 |
| en ammoniac | 8 | 5,31 | 100 | 65 |
| Solution $NH_4NO_3$ Entrée du réacteur 2 | 19 | 299,52 | 59,86 | 155 |
| Solution de $NH_4NO_3$ à la sortie du réacteur | 5 | 341,29 | 59,86 | 180 |
| Recyclage de la solution vers 3, 4, 20 et 39 | 22 | 299,52 | 59,86 | 180 |
| Soutirage de la solution vers la 1re détente | 10 | 41,77 | 59,86 | 180 |
| Sortie de l'évaporateur 13 (0,2 bar) | 15' | 32,5 | 76,9 | 78 |
| Sortie du rebouilleur 39 (2,2 bar) | 43 | 30,3 | 82,6 | 162 |
| Sortie du rebouilleur 42 (0,3 bar) | 47 | 26,6 | 94,1 | 121 |
| Sortie du rebouilleur 3 (0,3 bar) | 38 | 25,5 | 98,0 | 165 |
| | GJ/heure | | | |
| Energie fournie au rebouilleur 3 | 4,75 | | | |
| au rebouilleur 39 | 10,47 | | | |
| au récupérateur 20 | 5,68 | | | |

EP 0 116 529 B2

Il est évident que la présente invention n'est pas limitée aux installations spécifiques décrites ci-dessus et qu'on peut apporter de nombreuses modifications aux formes de réalisation décrites, sans sortir pour autant du cadre de l'invention.

Ainsi, si la pression du rebouilleur 42 est ajustée de manière à être supérieure à celle qui prévaut dans le conduit 14, on peut réutiliser au moins en partie la vapeur libérée dans le rebouilleur 42 pour chauffer l'évaporateur 13.

**Revendications**

1. Procédé de production de nitrate d'ammonium par neutralisation d'acide nitrique au moyen d'ammoniac au sein d'une solution aqueuse éventuellement maintenue en circulation dans une boucle de réaction et soumise à une pression supérieure à la tension de vapeur de la solution aqueuse de nitrate d'ammonium pendant la formation du nitrate d'ammonium, en utilisant la chaleur libérée par la réaction de neutralisation, du moins en partie, pour concentrer la solution de nitrate d'ammonium soutirée à la zone de réaction (1), par une double détente dans une installation d'évaporation dans laquelle au moins un évaporateur (16) qui porte la solution de nitrate d'ammonium à la concentration finale, est réchauffé au moyen de la chaleur disponible dans la zone de réaction (1), caractérisé en ce qu'on réalise la première étape de concentration par une double détente sans réchauffage dans une installation d'évaporation à effet intermédiaire en introduisant la solution soutirée de la zone de réaction (1) dans un séparateur (12) pour y réaliser une première détente adiabatique jusqu'à une première pression intermédiaire de manière à produire de la vapeur et une solution partiellement concentrée, puis en recueillant l'entièreté de la solution partiellement concentrée et la détendant immédiatement jusqu'à une deuxième pression, et en l'introduisant dans un évaporateur (13) pour concentrer ladite solution en y utilisant la chaleur de la vapeur libérée lors de la première détente.

2. Procédé selon la revendication 1, caractérisé en ce qu'on utilise la totalité de la vapeur libérée par la détente adiabatique de ladite solution de nitrate d'ammonium dans le séparateur (12) pour réchauffer l'évaporateur (13).

3. Procédé suivant la revendication 1, caractérisé en ce que l'on porte la solution de nitrate d'ammonium à la concentration finale dans un évaporateur (16), que l'on chauffe en utilisant, au moins en partie, la solution en recirculation comme fluide calorifère.

4. Procédé selon l'une quelconque des revendications précédentes, caractérisé en ce qu'on utilise la solution en recirculation dans la zone de réaction (1) comme fluide calorifère dans un échangeur de chaleur, pour produire de la vapeur basse pression et on concentre la solution que l'on soutire à la zone de réaction (1) dans une installation à multiple effet à pression décroissante dans laquelle l'évaporateur (16) amenant le mélange à la concentration finale utilise au moins en partie, la vapeur produite dans l'échangeur de chaleur (3) de ladite zone de réaction (1).

5. Procédé selon l'une quelconque des revendications précédentes, caractérisé en ce qu'on neutralise un léger excès d'ammoniac présent dans la zone de réaction (1), par un complément d'acide nitrique (11) dans la solution que l'on soutire de la zone de réaction (1), juste avant la première détente.

6. Procédé selon l'une quelconque des revendications précédentes, caractérisé en ce que le taux de recyclage de la solution de recirculation est ajusté de manière à limiter la montée en température dans la zone de réaction (1).

7. Installation de production de nitrate d'ammonium comprenant une zone de réaction (1) dans laquelle on injecte de l'ammoniac gazeux et de l'acide nitrique préchauffé à 65°C dans une boucle fermée d'un mélange de nitrate d'ammonium en recirculation soumise à une pression supérieure à la tension de vapeur de la solution aqueuse de nitrate d'ammonium obtenue, et une zone d'évaporation à effet, dans laquelle la solution de nitrate d'ammonium soutirée à la zone de réaction est soumise à au moins une double détente selon le procédé suivant l'une quelconque des revendications précédentes, caractérisé en ce qu'elle comprend un séparateur (12) réalisant une première détente adiabatique jusqu'à une première pression intermédiaire de,manière à produire de la vapeur et une solution partiellement concentrée, une vanne de détente (27) connectée à la sortie de solution du séparateur (12) afin de détendre la solution partiellement concentrée jusqu'à une deuxième pression, et en l'absence de réchauffage intermédiaire un évaporateur à film (13) ayant une première entrée connectée à la sortie de la vanne de détente (27) précitée et une seconde entrée connectée à la sortie de vapeur du séparateur (12), ledit évaporateur (13) ayant une sortie (15′) pour délivrer la solution concentrée vers au moins un évaporateur ultérieur (16) réalisant une seconde étape de concentration et chauffé au moyen de la chaleur disponible dans la zone de réaction.

8. Installation selon la revendication 7, caractérisé en ce que la seconde étape de concentration est réalisée par une série d'évaporateurs ultérieurs (39, 16) qui reçoivent un apport de chaleur fournie par la circulation du mélange réactionnel dans la boucle de réaction et qui font partie d'un ensemble comprenant éventuellement un générateur de vapeur (20) produisant de la vapeur basse pression et au moins un évaporateur à film (16).

9. Installation selon la revendication 8, caractérisée en ce que cet ensemble comprend également une paire d'échangeur-bouilleurs (39, 42) qui réalisent une préconcentration à 95 % en poids de la solution de nitrate d'ammonium, avant de traiter cette solution préconcentrée dans l'évaporateur final (16).

10. Installation selon la revendication 7, caractérisée en ce que la zone de réaction (1) est constituée d'une boucle de réaction comportant essentiellement un réacteur tubulaire (2), un échangeur de chaleur (3) et une pompe de recirculation (4).

## Claims

1. Process for producing ammonium nitrate by neutralising nitric acid by means of ammonia in aqueous solution, if necessary maintained in circulation in a reaction circuit and subjected to a pressure above the vapour pressure of the aqueous solution of ammonium nitrate during the formation of the ammonium nitrate, using the heat liberated by the neutralisation reaction, at least in part, for concentrating the ammonium nitrate solution withdrawn from the reaction zone (1) by double expansion in an evaporating installation in which at least one evaporator (16), which brings the ammonium nitrate solution to its final concentration, is reheated by means of the heat available from the reaction zone (1), characterised in that the first stage of concentration is achieved by a double expansion without intermediate reheating in an evaporating installation by introducing the solution withdrawn from the reaction zone (1) into a separator (12) to achieve a first adiabatic expansion to a first intermediate pressure, so as to produce vapour and a partially concentrated solution, then, the entire partially concentrated solution is collected and immediately expanded to a second pressure and introduced into an evaporator (13) to concentrate said solution using the heated vapour released at the time of the first expansion.

2. Process according to claim 1, characterised in that all of the vapour released by the adiabatic expansion of said ammonium nitrate solution in the separate (12) is used for reheating the evaporator (13).

3. Process according to claim 1, characterised in that in bringing the ammonium nitrate solution to its final concentration in an evaporator (16) the heat used is, at least in part, provided by the recirculation of the solution as a heat-carrying fluid.

4. Process according to any one of the preceding claims, characterised in that the solution circulating in the reactive zone (1) is used as a heat-carrying fluid in a heat exchanger to produce low pressure vapour, and the solution which is withdrawn from the reactive zone (1) is concentrated in a multi-stage installation of decreasing pressure in which the evaporator (16) which produces the mixture at the final concentration utilises, at least in part, the vapour produced in the heat exchange (3) of the said reaction zone (1).

5. Process according to any one of the preceding claims, characterised in that the slight excess of ammonium present in the reaction zone (1) is neutralised by an appropriate addition of nitric acid (11) to the solution withdrawn from the reaction zone (1) immediately before the first expansion.

6. Process according to any one of the preceding claims, characterised in that the rate of recycling of the circulating solution is adjusted in a manner so as to limit the temperature rise in the reaction zone (1).

7. Installation for producing ammonium nitrate comprising a reaction zone (1), into which the gaseous ammonia and nitric acid, preheated to 65°C are injected in a closed circuit, containing a mixture of ammonium nitrate circulating under a pressure above the vapour pressure of the aqueous ammonium nitrate solution which is obtained, an active evaporation zone in which the solution of ammonium nitrate withdrawn from the reaction zone is subjected to at least one double expansion according to the process in accordance withany one of the preceding claims, characterised in that it comprises a separator (12) which achieves a first adiabatic expansion to a first intermediate pressure so as to produce vapour and a partially concentrated solution, an expansion value (27) connected to the liquid outlet of the separator (12) in order to expand the partially concentrated solution to a second pressure without any intermediate reheating, and a film evaporator (13) with first inlet connected to the outlet of the aforesaid expansion value (27) and a second inlet connected to the vapour outlet of the separator (12), said evaporator (13) having an outlet (15) for delivering the concentrated solution towards at least one further evaporator (16) to achieve a second concentration stage heated by means of the heat available from the reaction zone (1).

8. Installation according to claim 7, characterised in that the second concentration stage is achieved by a series of further evaporators (39, 16) which receive an input of additional heat furnished by the circulation of the reaction mixture in the reaction circuit and which form part of an assembly comprising possibly a vapour generator (20) producing the low pressure vapour and at least one film evaporator (16).

9. Installation according to claim 8, characterised in that the assembly comprises a pair of equivalent heat exchangers/boilers (39, 42) which achieve a preliminary concentration of 95% by weight of the ammonium nitrate solution prior to treatment of the preliminary concentrated solution in the final evaporator (16).

10. Installation according to claim 7 characterised in that the reactive zone (1) is constituted by a reaction circuit comprising essentially a tubular reactor (2), a heat exchanger (3) and a circulating pump (4).

**Patentansprüche**

1. Verfahren zur Herstellung von Ammoniumnitrat durch Neutralisation von Salpetersäure mittels Ammoniak in einer wässerigen Lösung, die gegebenenfalls in einer Reaktionsschleife im Umlauf gehalten wird und einem Druck ausgesetzt ist, der höher ist als der Dampfdruck der wässerigen Ammoniumnitratlösung während der Bildung des Ammoniumnitrats, wobei die durch die Neutralisationsreaktion freigesetzte Wärme zumindest teilweise zum Konzentrieren der von der Reaktionszone (1) abgezogenen Ammoniumnitratlösung verwendet wird, durch doppelte Entspannung in einer Verdampfungsanlage, in welcher zumindest ein Verdampfer (16), der die Ammoniumnitratlösung auf die Endkonzentration bringt, mittels der in der Reaktionszone (1) verfügbaren Wärme wieder erhitzt wird, dadurch gekennzeichnet, daß man den ersten Schritt des Konzentrierens durch eine doppelte Entspannung ohne intermediäres Wiedererhitzen in einer Verdampfungsanlage durchführt, indem die von der Reaktionszone (1) abgezogene Lösung in einen Separator (12) eingeführt wird, um eine erste adiabatische Entspannung bis auf einen ersten Zwischendruck zu bewirken, um den Dampf und eine teilweise konzentrierte Lösung herzustellen, worauf man die Gesamtheit der partiell konzentrierten Lösung und des Entspannungsmittels sofort bis auf einen zweiten Druck sammelt und in einen Verdampfer (13) einführt, um die Lösung unter Verwendung der Wärme des Dampfes, die bei der zweiten Entspannung freigesetzt wird, zu konzentrieren.

2. Verfahren nach Anspruch 1, dadurch gekennzeichnet, daß man die Gesamtheit des Dampfes, der durch die adiabatische Entspannung der Ammoniumnitratlösung im Separator (12) freigesetzt wird, zum Wiedererhitzen des Verdampfers (13) verwendet.

3. Verfahren nach Anspruch 1, dadurch gekennzeichnet, daß man die Ammoniumnitratlösung im Verdampfer (16) auf die Endkonzentration bringt, den man unter Verwendung, zumindest teilweise, der im Umlauf befindlichen Lösung als Heizflüssigkeit erhitzt.

4. Verfahren nach einem der vorhergehenden Ansprüche, dadurch gekennzeichnet, daß man die in der Reaktionszone (1) in Umlauf befindliche Lösung als Heizflüssigkeit in einem Wärmeaustauscher zum Erzeugen des niedrigen Dampfdruckes verwendet und die Lösung, die von der Reaktionszone (1) abgezogen wird, in einer Mehrzweckvorrichtung bei abnehmendem Druck konzentriert, in welcher der Verdampfer (16), der die Mischung auf die Endkonzentration bringt, zumindest teilweise den im Wärmeaustauscher (3) der Reaktionszone (1) gebildeten Dampf verwertet.

5. Verfahren nach einem der vorhergehenden Ansprüche, dadurch gekennzeichnet, daß man einen leichten Überschuß von Ammoniak, der in der Reaktionszone (1) vorhanden ist, durch einen Zusatz von Salpetersäure (11) in die Lösung, die von der Reaktionszone (1) abgezogen wird, unmittelbar vor der ersten Entspannung neutralisiert.

6. Verfahren nach einem der vorhergehenden Ansprüche, dadurch gekennzeichnet, daß der Rückführungsgrad der in Umlauf befindlichen Lösung so eingestellt wird, daß er das Ansteigen der Temperatur in der Reaktionszone (1) begrenzt.

7. Anlage zur Herstellung von Ammoniumnitrat umfassend eine Reaktionszone (1), in welche man das gasförmige Ammoniak und die auf 65°C vorerhitzte Salpetersäure in einem geschlossenen Kreislauf einer rückzirkulierenden Ammoniumnitratmischung einführt, die einem Druck ausgesetzt ist, der höher ist der Dampfdruck der erhaltenen wässerigen Ammoniumnitratlösung, und eine Verdampfungszone, in welcher die von der Reaktionszone abgezogene Ammoniumnitratlösung zumindest einer doppelten Entspannung gemäß dem Verfahren nach einem der vorhergehenden Ansprüche unterworfen wird, dadurch gekennzeichnet, daß sie einen Separator (12), der eine erste adiabatische Entspannung bis zu einem ersten Zwischendruck bewirkt, um den Dampf und eine teilweise konzentrierte Lösung zu bilden, ein Druckreduzierventil (27), das mit dem Lösungsauslaß des Separators in Verbindung steht, um die teilweise konzentrierte Lösung auf einen zweiten Druck ohne intermediäres Wiedererhitzen zu entspannen, und einen Filmverdampfer (13) mit einem ersten Einlaß, der mit dem Auslaß des obgenannten Druckreduzierventils (27) verbunden ist, und einem zweiten Einlaß, der mit dem Dampfauslaß des Separators (12) verbunden ist, wobei der Verdampfer (13) einen Auslaß (15′) zum Befördern der konzentrierten Lösung zu mindestens einem Endverdampfer (16) aufweist, der einen zweiten Schritt des Konzentrierens bewirkt und mittels der in der Reaktionszone verfügbaren Wärme erhitzt wird.

8. Anlage nach Anspruch 7, dadurch gekennzeichnet, daß der zweite Schritt des Konzentrierens durch eine Reihe von Endverdampfern (39, 16) bewirkt wird, denen zusätzliche Wärme zugeführt wird, welche durch die Zirkulation der Reaktionsmischung in der Reaktionsschleife geliefert wird, und die Bestandteil eines Komplexes sind, der gegebenenfalls einen Dampfgenerator (20), der den Niederdruckdampf bildet, und zumindest einen Filmverdampfer (16) umfaßt.

9. Anlage nach Anspruch 8, dadurch gekennzeichnet, daß dieser Komplex auch ein Paar von Austauscher-Kochern (39, 42) umfaßt, die eine Vorkonzentration der Ammoniumnitratlösung auf 95 Gew.% bewirken, bevor die vorkonzentrierte Lösung im Endverdampfer (16) behandelt wird.

10. Anlage nach Anspruch 7, dadurch gekennzeichnet, daß die Reaktionszone (1) aus einer Reaktionsschleife besteht, die im wesentlichen einen rohrförmigen Reaktor (2), einen Wärmeaustauscher (3) und eine Rückführungspumpe (4) umfaßt.

FIG. 1

FIG. 2

FIG. 3

FIG. 4